# FASCICULE DE BREVET EUROPEEN

(11) **EP 2 731 482 B1**
(45) Date de publication et mention de la délivrance du brevet: **16.09.2015**
(21) Numéro de dépôt: 12744046.9
(22) Date de dépôt: 05.07.2012
(51) Int. Cl.: A47J 37/10, A47J 43/07, A47J 36/16, A47J 37/12

(54) **ARTICLE CULINAIRE MUNI D'UNE POIGNEE COOPERANT ELECTRIQUEMENT AVEC UN ACCESSOIRE AMOVIBLE**
KÜCHENARTIKEL MIT EINEM GRIFF ZUR ELEKTRISCHEN ZUSAMMENWIRKUNG MIT EINEM ABNEHMBAREN ZUBEHÖRTEIL
KITCHENWARE ITEM PROVIDED WITH A HANDLE THAT ELECTRICALLY COOPERATES WITH A REMOVABLE ACCESSORY

(30) Priorité: 13.07.2011 FR 1156365
(43) Date de publication de la demande: 21.05.2014
(73) Titulaire: SEB S.A., 69130 Ecully (FR)
(72) Inventeur: BONNEL, Jocelyn, F-73310 Vions (FR)
(74) Mandataire: Bourrières, Patrice
(86) Numéro de dépôt international: PCT/FR2012/051578
(87) Numéro de publication internationale: WO 2013/007928

(56) Documents cités:
- WO-A1-2009/020384
- FR-A1- 2 886 831
- US-A1- 2006 278 095

## Description

La présente invention concerne un article culinaire destiné à la cuisson d'aliments notamment une poêle, une casserole, une sauteuse, un faitout ou un autocuiseur comportant une poignée et un accessoire amovible notamment un couvercle.

On connaît du document CH686338 un article culinaire muni d'un couvercle comportant un moteur alimenté par une batterie et un agitateur entrainé en rotation par le moteur pour brasser les aliments. Un tel agencement permet de mécaniser la fonction remuage à l'aide du moteur et de la batterie pour aider l'utilisateur.

Cependant, un article culinaire avec un tel couvercle ne permet pas à l'utilisateur de surveiller facilement la cuisson des aliments. En effet, le couvercle est alourdi essentiellement par le poids de la batterie et par conséquent difficile à manipuler. De plus, la batterie crée une excroissance sur la partie supérieure du couvercle qui complique le rangement de l'articule culinaire muni du couvercle.

Le but de la présente invention est de remédier aux inconvénients précités et de proposer un article culinaire muni d'un accessoire amovible présentant une ergonomie optimisée pour permettre à l'utilisateur de le manipuler facilement, en toute sécurité.

Un autre but de l'invention est de proposer un article culinaire muni d'un accessoire amovible qui puisse être rangé facilement.

Un autre but de l'invention est de proposer un article culinaire muni d'un accessoire amovible qui soit de conception simple et économique à mettre en oeuvre.

Ces buts sont atteints avec un article culinaire selon la revendication 1.

Par accessoire amovible, on comprend un accessoire que l'utilisateur peut facilement retirer ou replacer sur l'article culinaire pendant la cuisson des aliments, sans mettre en oeuvre un outillage.

Un tel agencement permet d'obtenir un article culinaire muni d'un accessoire amovible offrant à l'utilisateur des fonctions mécanisées à l'aide du dispositif électromécanique alimenté par la source d'énergie. Le composant lourd et volumineux, permettant la mécanisation des fonctions, à savoir la source d'énergie, est positionné dans la poignée. Ceci permet de ne pas alourdir l'accessoire, de ne pas générer d'excroissances et ainsi de conserver un accessoire facile à utiliser et à ranger. De plus, l'agencement de la source d'énergie dans la poignée permet d'améliorer l'ergonomie en déplaçant le centre de gravité vers la poignée saisie par l'utilisateur.

Avantageusement, les moyens de connexion-déconnexion électrique sont en partie agencés sur la poignée et en partie sur l'accessoire pour permettre à l'utilisateur de retirer ou replacer l'accessoire sur l'article culinaire (1).

De préférence, l'accessoire repose sur la calotte.

Avantageusement, les moyens de connexion-déconnexion électrique comportent des bornes de contact électrique et des plots de contact électrique, lesdits plots de contact venant en contact avec les bornes de contact quand la poignée et l'accessoire sont assemblés.

Cette disposition permet d'obtenir des moyens de connexion-déconnexion simples et économiques à mettre en oeuvre.

De préférence, les plots de contact électrique sont repoussés par des moyens de rappel élastique à l'encontre des bornes pour limiter la résistance de contact à moins de 100 mOmhs, de préférence à moins de 10 mOhms.

Cette disposition permet d'éviter un échauffement au niveau des contacts lors de l'alimentation du dispositif électromécanique par la source d'énergie électrique et ainsi d'obtenir une connexion électrique fiable et sûre. De plus, cette disposition permet d'évacuer d'éventuelles pollutions qui pourraient s'interposer entre les plots de contacts sous l'effet de la force générée sur les contacts par les moyens de rappel.

Avantageusement, chaque plot de contact électrique et chaque borne de contact électrique présente une section d'au moins 0,75mm² pour résister à un courant supérieur à 0,5 A, de préférence supérieur à 3 A.

Cette disposition permet d'obtenir une connexion électrique permettant de passer des courants importants et ainsi avoir un dispositif électromécanique puissant, notamment comportant un actionneur.

De préférence, la poignée comprend un corps de préhension creux et la source d'énergie électrique est une batterie, logée dans ledit corps.

Cette disposition permet d'obtenir une source d'énergie rechargeable ayant une autonomie suffisante pour la mécanisation des fonctions envisagées.

Avantageusement, l'accessoire amovible est un couvercle adapté à recouvrir la calotte.

Le couvercle recouvre l'article culinaire pour former avec la calotte une enceinte de cuisson et occupe une position surélevée au dessus des aliments. Le couvercle muni de son dispositif électromécanique est donc un accessoire intéressant pour fournir à l'utilisateur des fonctions mécanisées.

De préférence, le dispositif électromécanique agencé sur le couvercle comporte un moteur électrique.

Cette disposition permet de mécaniser de manière économique des fonctions supportées par le couvercle

Avantageusement, le couvercle comporte des moyens de remuage ou de broyage des aliments disposés dans la calotte, lesdits moyens de remuage ou de broyage étant entrainés par le moteur électrique.

Cette disposition permet de mécaniser la fonction remuage ou broyage des aliments disposés dans la calotte.

De préférence, les moyens de remuage comportent une pale de brassage.

Avantageusement, le couvercle comporte des moyens de refroidissement dudit couvercle, lesdits moyens de refroidissement étant entrainés par le moteur électrique.

Cette disposition permet de mécaniser la fonction refroidissement du couvercle. Le refroidissement du couvercle permet de condenser la vapeur générée par les aliments contenus dans la calotte lors de la cuisson. L'eau condensée retombe sur les aliments et ainsi, permet d'éviter leur desséchement.

De préférence, les moyens de refroidissement comportent une hélice de ventilation.

Cette disposition permet d'obtenir des moyens de refroidissement simples et économique à mettre en oeuvre.

Avantageusement, l'accessoire amovible est un dispositif d'éclairage de l'intérieur de la calotte.

Cette disposition permet d'obtenir un éclairage très efficace des aliments en cours de cuisson dans la calotte.

Avantageusement, les moyens de fixation de la poignée sont détachables pour fixer ladite poignée à la paroi latérale de manière amovible.

Cette disposition permet d'améliorer le rangement de l'article culinaire et également de faciliter le rechargement de la batterie, la poignée pouvant être disposée sur un socle de rechargement, une fois détachée de l'article culinaire.

De préférence, l'article culinaire est une poêle, une casserole, une sauteuse ou un faitout.

De préférence, l'article culinaire un autocuiseur formant une enceinte de cuisson étanche, au sein de laquelle sont cuits des aliments sous pression de vapeur.

L'invention sera mieux comprise à l'étude des modes de réalisation pris à titre nullement limitatif et illustrés dans les figures annexées dans lesquelles :
- La figure 1 illustre une vue schématique en coupe d'un article culinaire et d'un couvercle selon un mode particulier de réalisation de l'invention.
- La figure 2 illustre une vue schématique en perspective de la poignée et du couvercle (vue partielle) de l'article culinaire illustré sur la figure 1.
- La figure 3 illustre une vue schématique partielle en coupe d'un plot de contact électrique de la poignée suivant la ligne III - III illustrée sur la figure 2.
- La figure 4 illustre une vue schématique partielle en coupe d'un plot de contact électrique de la poignée illustré sur la figure 3, le couvercle étant mis en place sur l'article culinaire.
- La figure 5 illustre une vue schématique en coupe d'un article culinaire et d'un couvercle selon un autre mode de réalisation de l'invention.
- La figure 6 illustre une vue schématique en coupe d'une poignée amovible de l'article culinaire selon un mode particulier de réalisation de l'invention.
- La figure 7 illustre une vue en perspective de la poignée amovible illustrée sur la figure 6.
- La figure 8 illustre une vue schématique en coupe d'un article culinaire et d'un dispositif d'éclairage selon un autre mode de réalisation de l'invention.

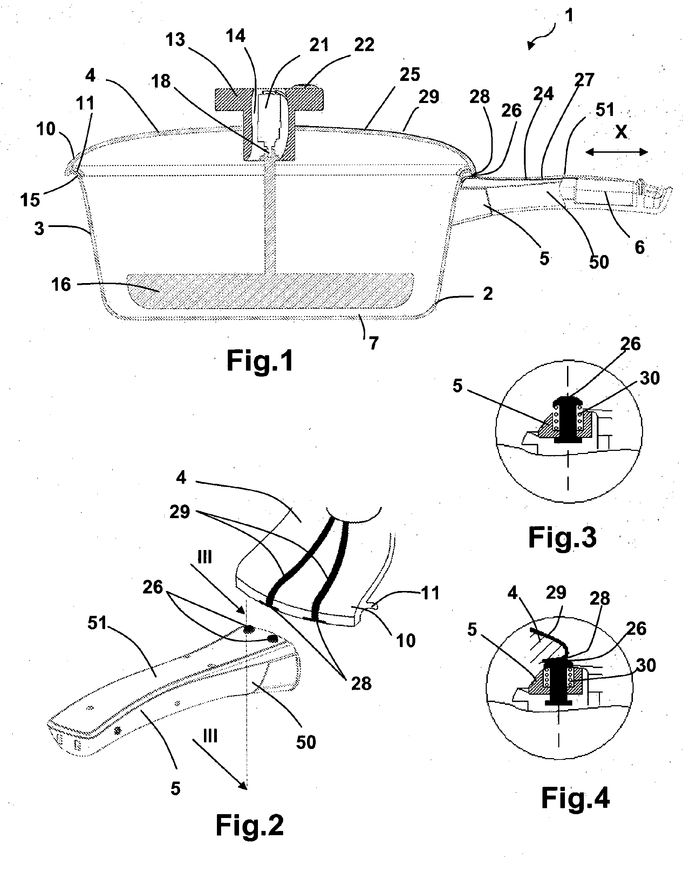

Selon un premier mode de réalisation visible aux figures 1 et 2, un article culinaire 1 comprend une calotte 2 munie d'un fond 7 et d'une paroi latérale 3, un couvercle 4 adapté à recouvrir la calotte 2 et une poignée 5. La poignée 5 est fixée à la paroi latérale 3 par des moyens de fixation (non représentés sur les figures). Les moyens de fixation peuvent comporter un goujon fixé à la calotte qui coopère avec une vis disposée dans une ouverture de la poignée.

La poignée 5 présente une forme allongée et s'étend depuis la paroi latérale 3 selon une direction longitudinale X. La poignée 5 comprend un corps 50 de préhension dans lequel est logée une source d'énergie électrique 6.

La paroi latérale 3 comprend un bord supérieur 15 qui peut être recourbé vers l'extérieur pour former un bec verseur sur lequel repose le couvercle 4. Le couvercle 4 comporte un rebord extérieur 10 qui s'étend radialement au-delà du bord supérieur 15 et qui est muni d'un retour de matière 11 formant une paroi sensiblement horizontale. Le rebord extérieur 10 du couvercle 4 repose sur le bord supérieur 15 de la calotte 2.

Le couvercle 4 comporte un dispositif électromécanique comprenant un moteur électrique 21 commandé par des moyens de commande et alimenté par la source d'énergie 6 à l'aide d'un circuit électrique. Le circuit électrique comporte une première partie 24 disposée dans la poignée 5 et une deuxième partie 25 disposée dans le couvercle 4.

La première partie 24 du circuit électrique comporte des plots 26 de contacts électriques reliés à la source d'énergie 6 par deux fils de connexion 27. Les plots 26 ont une forme générale cylindrique et sont agencés de manière mobile en translation suivant une direction perpendiculaire à la direction longitudinale X, sur une face supérieure 51 de la poignée 5.

La deuxième partie 25 du circuit électrique comporte des bornes 28 de contact reliées à un circuit de commande compris dans les moyens de commande par deux pistes 29 de connexion déposées par sérigraphie sur le couvercle.

Dans une variante de réalisation non illustrée, les bornes 28 de contact sont reliées au circuit de commande par deux fils de connexion. Les fils de connexion et les bornes de contact sont agencés dans un capot fixé sur le couvercle. D'une manière avantageuse, le capot comporte au niveau des bornes de contact des excroissances permettant de positionner le couvercle 4 sur la poignée 5.

Les bornes 28 de contact sont adaptées à être connectées aux plots 26 de contact lorsque le couvercle 4 repose sur la calotte 2. Les plots 26 sont mobiles entre une position de repos en l'absence du couvercle 4, dans laquelle ils font saillie au dessus de la face supérieure 51 de la poignée 5 sous l'action de ressorts 30 (fig. 3) et une position de travail dans laquelle ils sont repoussés vers l'intérieur de la poignée 5 par les bornes 28 de contact sous le poids du couvercle 4 à l'encontre de la force de rappel des ressorts 30 pour limiter la résistance de contact à moins de 10mOmhs (Fig. 4). Dans ce mode de réalisation, les plots 26 et les bornes 28 sont connectées suivant une direction verticale, perpendiculaire au fond 7 de la calotte 2.

Chaque plot 26 de contact électrique et chaque borne 28 de contact électrique présentent une section d'au moins 0,75mm² pour résister à un courant supérieur à 0,5 A, de préférence supérieur à 3 A.

Selon un autre mode de réalisation non illustré, la deuxième partie du circuit électrique comprend au moins une borne de forme concave adaptée à recevoir l'extrémité d'un des plots de contact électrique prévus sur la poignée. La borne de forme concave est formée par un bossage dans le rebord du couvercle. La tête du plot présente une forme convexe complémentaire de celle de la borne de forme concave. Les bornes de forme concave associées aux plots présentant une tête de forme convexe permettent un meilleur contact électrique et peuvent corriger un léger désalignement du couvercle par rapport à la poignée.

La source d'énergie électrique 6 peut comprendre une source d'énergie électrique rechargeable (accumulateur ou super capacité) ou une ou plusieurs piles. Par exemple, l'accumulateur peut présenter une tension de 3,6 Volt et une intensité de 780 milliampères heures. La source d'énergie électrique 6 peut être amovible pour être rechargée sur un chargeur indépendant de l'article culinaire 1.

Tel que visible à la figure 1, le couvercle 4 comporte une poignée 13 agencée de manière centrale. La poignée 13 comprend une cavité 14 dans laquelle est agencé un moteur électrique 21 commandé par des moyens de commande. Les moyens de commande comprennent un bouton de commande 22 accessible depuis l'extérieur de la poignée 13 du couvercle 4 et un circuit électronique (non représenté) relié au bouton de commande 22 et au moteur électrique 21. Le bouton de commande 22 est agencé dans une partie supérieure de la poignée 13. Lorsque l'utilisateur actionne le bouton de commande 22, un signal est transmis au circuit électronique qui commande la rotation du moteur électrique 21.

Une pale 16 est agencée sur un arbre de sortie 18 du moteur électrique 21. La rotation du moteur électrique 21 entraine la pale 16, permettant ainsi de brasser des aliments (purée, poêlée de légume, soupe par exemple) disposés dans le fond de la calotte. La pale 16 peut être assemblée sur l'arbre de sortie 18 du moteur électrique 21 par des moyens de fixation permettant à l'utilisateur de démonter la pale par exemple pour faciliter le lavage. La pale peut être pliable et rabattable dans le couvercle. La pale peut prendre différentes formes suivant la préparation à réaliser. Par exemple, la pale comporte une paroi verticale pleine munie d'un retour de matière en partie inférieure pour retourner les aliments dans le cas d'un brassage ou la pale présente une paroi ajourée pour les sauces et les soupes.

Dans une variante de réalisation, le couvercle comporte des moyens de broyage des aliments. Les moyens de broyage peuvent comporter un plateau perforé ou une portion de plateau. Le plateau, disposé horizontalement au dessus des aliments, est animé d'un mouvement de monte et baisse combiné à une rotation de quelques degrés à chaque mouvement de monte et baisse. Dans ce mode de réalisation, le couvercle comporte des moyens de verrouillage sur la calotte.

De préférence, le moteur électrique 21 comprend un réducteur de vitesse. Par exemple, la vitesse de rotation du moteur est adaptée pour ehtrainer la pale à une vitesse d'environ quinze tours par minute. La vitesse de rotation de la pale peut être réglable.

En fonctionnement, l'utilisateur place des aliments à cuire dans l'article culinaire 1 et pour réaliser la cuisson, il place l'article culinaire 1 sur une source de chauffe. Il saisit le couvercle 4 et positionne le rebord extérieur 10 sur le bord supérieur 15 en alignant les bornes 28 sur les plots 26 dans un mouvement de translation verticale. Sous l'effet du poids du couvercle 4, les plots 26 sont repoussés par les bornes 28 vers l'intérieur de la poignée 5, à l'encontre de la force de rappel des ressorts 30. Ainsi, le circuit électrique reliant la source d'énergie électrique 6 au moteur électrique 21 est fermé. Lorsqu'il le souhaite, l'utilisateur actionne la pale 16 de remuage en appuyant sur le bouton de commande 22. L'utilisateur peut soulever le couvercle 4 en cours de cuisson, ce qui provoque la séparation des bornes 28 et des plots 26. Le circuit électrique est ainsi ouvert et la pale 16 de remuage s'arrête.

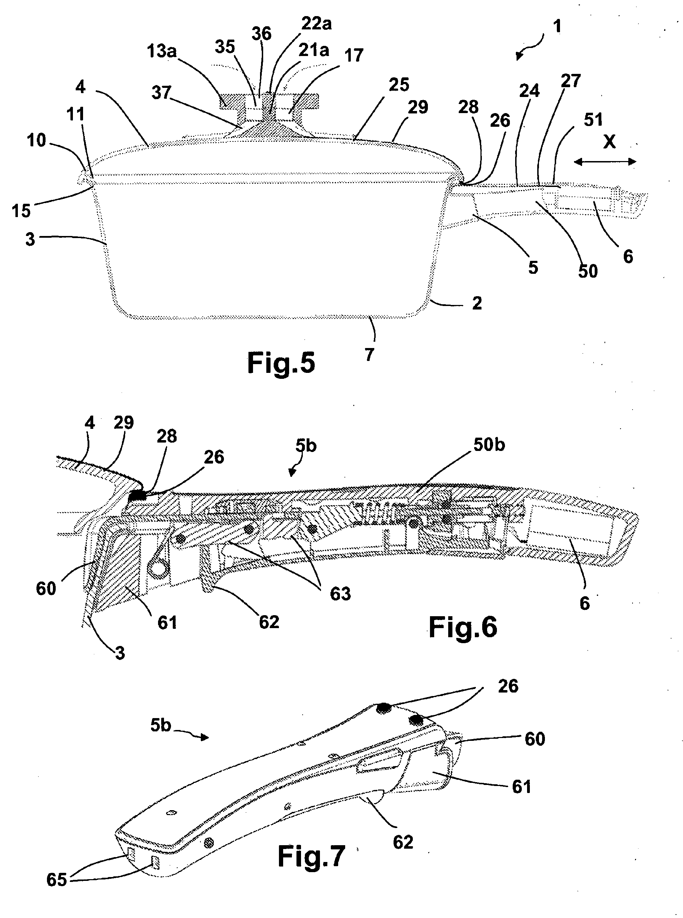

Selon le mode de réalisation illustré à la figure 5, le couvercle 4 comporte une poignée 13a comprenant un moteur électrique 21 a qui entraîne en rotation une hélice 17 de ventilation. La poignée 13a comporte un canal central 35 dans lequel sont agencés le moteur électrique 21 a et l'hélice 17 pour faire circuler l'air entre une entrée 36 disposée dans une partie supérieure de la poignée 13a et des orifices 37 de sortie diffusant l'air de manière sensiblement tangentielle au couvercle 4. Le moteur électrique 21 a est commandé par des moyens de commande comprenant un bouton de commande 22a.

Dans une variante illustrée aux figures 6 et 7, une poignée 5b comporte des moyens de fixation détachables pour fixer ladite poignée 5b à la paroi latérale 3 de manière amovible. Les moyens de fixation comprennent deux mors 60, 61 formant pince dont un mors 60 est mobile en translation par rapport à l'autre mors 61 entre une position ouverte et une position fermée dans laquelle les deux mors 60, 61 pincent la paroi latérale 3 de l'article culinaire. Les moyens de fixation comprennent également des moyens de déplacement adaptés à déplacer les mors 60, 61 formant pince entre la position ouverte et la position fermée. Les moyens de déplacement comprennent un levier 62 monté en pivotement sur la poignée 5b entre une position écartée et une position escamotée à l'intérieur de la poignée 5b. Un ensemble de bielles 63 est adapté à déplacer le mors 60 mobile en translation lorsque le levier 62 est pivoté manuellement par l'utilisateur. Une telle poignée amovible est décrite plus en détail dans le document FR 2 898 031.

La poignée 5b comporte un corps de préhension 50b dans lequel est logée une source d'énergie électrique 6 reliée aux plots 26 de connexion. Dans le cas de l'utilisation d'une source d'énergie électrique rechargeable, la poignée 5b comprend des moyens de connexion électrique accessibles depuis l'extérieur de la poignée pour permettre le rechargement en courant de la source d'énergie électrique 6 rechargeable. Les moyens de connexion électrique peuvent comprendre deux bornes de connexion électrique 65 reliées à la source d'énergie électrique 6 rechargeable. Les bornes de connexion électrique 65 sont connectables de façon amovible à deux bornes de connexion électrique prévues sur une base de rechargement pour permettre le rechargement de la source d'énergie électrique 6 en courant électrique. Les bornes de connexion électrique 65 sont disposées à l'arrière de la poignée.

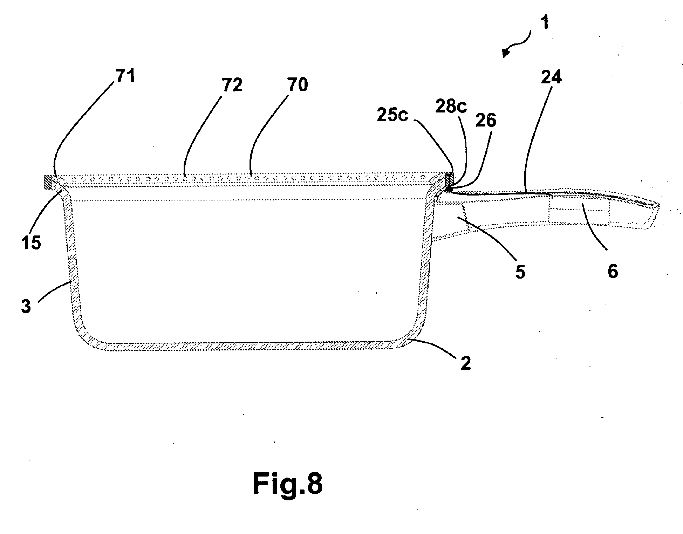

Selon un autre mode de réalisation visible à la figure 8, l'article culinaire 1 comprend un dispositif d'éclairage 70 amovible reposant sur le bord supérieur 15 de la paroi latérale 3. Le dispositif d'éclairage 70 comporte un cadre 71 supportant un dispositif électromécanique comprenant des diodes 72 électroluminescentes (LED) alimenté par la source d'énergie 6 à l'aide d'un circuit électrique. Le circuit électrique comporte la première partie 24 disposée dans la poignée 5 et une deuxième partie 25c disposée dans le dispositif d'éclairage 70.

La première partie 24 du circuit électrique comporte les plots 26 de contacts électriques reliés à la source d'énergie 6. La deuxième partie 25c du circuit électrique comporte des bornes 28c de contact reliées aux diodes 72 électroluminescentes.

Dans une variante, le dispositif d'éclairage 70 comporte des moyens de commande des diodes 72 électroluminescentes, par exemple sous la forme d'un commutateur disposé sur le cadre 71 ou sur la poignée 5.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation, le couvercle 4 comporte une partie transparente pour permettre à l'utilisateur de surveiller la cuisson sans toucher a couvercle.

Dans une autre variante de réalisation, le couvercle supportant le dispositif électromécanique peut être remplacé par un élément de support, par exemple du type trépied.

## Revendications

1. Article culinaire (1) destiné à la cuisson d'aliments comportant une calotte (2) munie d'une paroi latérale (3), une poignée (5, 5b) comprenant des moyens de fixation pour la fixer à la paroi latérale (3) et un accessoire (4, 70) amovible de l'article culinaire (1), ledit accessoire (4) étant distinct de la poignée (5, 5b) et comprenant un dispositif électromécanique, **caractérisé en ce que** ladite poignée (5, 5b) comporte une source d'énergie électrique (6), **en ce que** la source d'énergie électrique (6) alimente le dispositif électromécanique agencé sur l'accessoire (4, 70) à l'aide d'un circuit électrique (24, 25) comportant des moyens de connexion-déconnexion électrique (26, 28).

2. Article culinaire (1) selon la revendication 1, **caractérisé en ce que** les moyens de connexion-déconnexion électrique sont en partie agencés sur la poignée (5, 5b) et en partie sur l'accessoire (4, 70) pour permettre à l'utilisateur de retirer ou replacer l'accessoire (4, 70) sur l'article culinaire (1).

3. Article culinaire (1) selon l'une des revendications 1 à 2, **caractérisé en ce que** l'accessoire (4, 70) repose sur la calotte (2).

4. Article culinaire (1) selon l'une des revendications 1 à 3, **caractérisé en ce que** les moyens de connexion-déconnexion électrique comportent des bornes (28) de contact électrique et des plots (26) de contact électrique, lesdits plots (26) de contact venant en contact avec les bornes (28) de contact quand la poignée (5, 5b) et l'accessoire (4) sont assemblés.

5. Article culinaire (1) selon la revendication 4, **caractérisé en ce que** les plots (26) de contact électrique sont repoussés par des moyens de rappel élastique (30) à l'encontre des bornes (28) pour limiter la résistance de contact à moins de 100 mOmhs, de préférence à moins de 10 mOhms.

6. Article culinaire (1) selon l'une des revendications 1 à 5, **caractérisé en ce que** la poignée (5, 5b) comprend un corps (50) de préhension creux et la source d'énergie électrique (6) est une batterie, logée dans ledit corps.

7. Article culinaire (1) selon l'une des revendications 1 à 6, **caractérisé en ce que** l'accessoire amovible est un couvercle (4) adapté à recouvrir la calotte (2).

8. Article culinaire (1) selon l'une des revendications 1 à 7, **caractérisé en ce que** le dispositif électromécanique agencé sur le couvercle (4) comporte un moteur électrique (21, 21 a).

9. Article culinaire (1) selon la revendication 8, **caractérisé en ce que** le couvercle (4) comporte des moyens de remuage (16) ou de broyage des aliments disposés dans la calotte, lesdits moyens de remuage (16) ou de broyage étant entrainés par le moteur électrique (21).

10. Article culinaire (1) selon la revendication 9, **caractérisé en ce que** les moyens de remuage comportent une pale (16) de brassage.

11. Article culinaire (1) selon la revendication 8, **caractérisé en ce que** le couvercle (4) comporte des moyens de refroidissement dudit couvercle (4), lesdits moyens de refroidissement étant entrainés par le moteur électrique (21 a).

12. Article culinaire (1) selon la revendication 11, **caractérisé en ce que** les moyens de refroidissement comportent une hélice (17) de ventilation.

13. Article culinaire (1) selon l'une des revendications 1 ou 6, **caractérisé en ce que** l'accessoire amovible est un dispositif d'éclairage (70) de l'intérieur de la calotte (2).

14. Article culinaire (1) selon l'une des revendications 1 à 13, **caractérisé en ce que** les moyens de fixation de la poignée (5b) sont détachables pour fixer ladite poignée (5b) à la paroi latérale (3) de manière amovible.

15. Article culinaire (1) selon l'une des revendications 1 à 14, **caractérisé en ce qu'**il est une poêle, une casserole, une sauteuse, un faitout ou un autocuiseur formant une enceinte de cuisson étanche, au sein de laquelle sont cuits des aliments sous pression de vapeur.

## Patentansprüche

1. Kochgeschirr (1) zum Garen von Nahrungsmitteln mit einem Topf (2), der mit einer Seitenwand (3) ausgestattet ist, einem Griff (5, 5b) mit Befestigungsmitteln zur Befestigung an der Seitenwand (3) und einem von dem Kochgeschirr (1) abnehmbaren Zubehörteil (4, 70), wobei das genannte Zubehörteil (4) von dem Griff (5, 5b) getrennt ist und eine elektromechanische Vorrichtung umfasst, **dadurch gekennzeichnet, dass** der genannte Griff (5, 5b) eine elektrische Stromquelle (6) umfasst und dass die elektrische Stromquelle (6) die an dem Zubehörteil (4, 70) angeordnete elektromechanische Vorrichtung mit Hilfe eines Stromkreises (24, 25) versorgt, der Mittel zum elektrischen Verbinden und Trennen (26, 28) umfasst.

2. Kochgeschirr (1) nach Anspruch 1, **dadurch gekennzeichnet, dass** die Mittel zum elektrischen Verbinden und Trennen teilweise an dem Griff (5, 5b) und teilweise an dem Zubehörteil (4, 70) angeordnet sind, damit der Benutzer das Zubehörteil (4, 70) von dem Kochgeschirr (1) abnehmen oder es ersetzen kann.

3. Kochgeschirr (1) nach einem der Ansprüche 1 bis 2, **dadurch gekennzeichnet, dass** das Zubehörteil (4, 70) auf dem Topf (2) ruht.

4. Kochgeschirr (1) nach einem der Ansprüche 1 bis 3, **dadurch gekennzeichnet, dass** die Mittel zum elektrischen Verbinden und Trennen elektrische Kontaktklemmen (28) und elektrische Kontaktplättchen (26) aufweisen, wobei die genannten Kontaktplättchen (26) mit den Kontaktklemmen (28) in Berührung kommen, wenn der Griff (5, 5b) und das Zubehörteil (4) zusammengesetzt werden.

5. Kochgeschirr (1) nach Anspruch 4, **dadurch gekennzeichnet, dass** die elektrischen Kontaktplättchen (26) beim Zusammentreffen mit den Klemmen (28) von elastischen Rückstellmitteln (30) zurück gedrückt werden, um den Kontaktwiderstand auf unter 100 mOhm und vorzugsweise auf unter 10 mOhm zu begrenzen.

6. Kochgeschirr (1) nach einem der Ansprüche 1 bis 5, **dadurch gekennzeichnet, dass** der Griff (5, 5b) einen hohlen Griffkörper (50) umfasst und die elektrische Stromquelle (6) eine Batterie ist, die in dem genannten Körper untergebracht ist.

7. Kochgeschirr (1) nach einem der Ansprüche 1 bis 6, **dadurch gekennzeichnet, dass** das abnehmbare Zubehörteil ein Deckel (4) zum Bedecken des Topfes (2) ist.

8. Kochgeschirr (1) nach einem der Ansprüche 1 bis 7, **dadurch gekennzeichnet, dass** die an dem Deckel (4) angeordnete elektromechanische Vorrichtung einen elektrischen Motor (21, 21 a) umfasst.

9. Kochgeschirr (1) nach Anspruch 8, **dadurch gekennzeichnet, dass** der Deckel (4) Mittel zum Umrühren (16) oder Zerkleinern von in dem Topf befindlichen Nahrungsmitteln umfasst, wobei die genannten Mittel zum Umrühren (16) oder Zerkleinern von dem elektrischen Motor (21) angetrieben werden.

10. Kochgeschirr (1) nach Anspruch 9, **dadurch gekennzeichnet, dass** die Mittel zum Umrühren einen Rührflügel (16) umfassen.

11. Kochgeschirr (1) nach Anspruch 8, **dadurch gekennzeichnet, dass** der Deckel (4) Mittel zum Kühlen des genannten Deckels (4) umfasst, wobei die genannten Kühlungsmittel von dem elektrischen Motor (21a) angetrieben werden.

12. Kochgeschirr (1) nach Anspruch 11, **dadurch gekennzeichnet, dass** die Kühlungsmittel ein Flügelrad (17) umfassen.

13. Kochgeschirr (1) nach einem der Ansprüche 1 oder 6, **dadurch gekennzeichnet, dass** das abnehmbare Zubehörteil eine Vorrichtung (70) zur Beleuchtung des Innenraums des Topfes (2) ist.

14. Kochgeschirr (1) nach einem der Ansprüche 1 bis 13, **dadurch gekennzeichnet, dass** die Mittel zur Befestigung des Griffs (5b) zur lösbaren Befestigung des genannten Griffs (5b) an der Seitenwand (3) abnehmbar sind.

15. Kochgeschirr (1) nach einem der Ansprüche 1 bis 14, **dadurch gekennzeichnet, dass** es sich um eine Pfanne, eine Kasserolle, einen Schmortopf, einen Kochtopf oder einen Schnellkochtopf handelt und einen dichten Garraum bildet, in dem Nahrungsmittel unter Dampfdruck gegart werden.

## Claims

1. Culinary article (1) for cooking food comprising a cap (2) provided with a side wall (3), a handle (5, 5b) comprising fastening means for securing it to the side wall (3) and an accessory (4, 70) removable from the culinary article (1), said accessory (4) being separate from the handle (5, 5b) and comprising an electromechanical device, **characterised in that** said handle (5, 5b) includes an electrical energy source (6), **in that** the electrical energy source (6) powers the electromechanical device arranged on the accessory (4, 70) via an electrical circuit (24, 25) having electrical connection-disconnection means (26, 28).

2. Culinary article (1) according to claim 1, **characterised in that** the electrical connection-disconnection means are arranged partly on the handle (5, 5b) and partly on the accessory (4, 70) to allow the user to remove or replace the accessory (4, 70) on the culinary article (1).

3. Culinary article (1) according to claim 1 or 2, **characterised in that** the accessory (4, 70) rests on the cap (2).

4. Culinary article (1) according to one of claims 1 to 3, **characterised in that** the electrical connection-disconnection means comprise electrical contact terminals (28) and electrical contact pads (26), said contact pads (26) coming into contact with the contact terminals (28) when the handle (5, 5b) and the accessory (4) are assembled.

5. Culinary article (1) according to claim 4, **characterised in that** the electrical contact pads (26) are pushed by spring return means (30) against the terminals (28) to limit the contact resistance to less than 100 mOmhs, preferably less than 10 mOhms.

6. Culinary article (1) according to one of claims 1 to 5, **characterised in that** the handle (5, 5b) comprises a hollow gripping body (50) and the electrical energy source (6) is a battery, housed in said body.

7. Culinary article (1) according to one of claims 1 to 6, **characterised in that** the removable accessory is a lid (4) adapted to cover the cap (2).

8. Culinary article (1) according to one of claims 1 to 7, **characterised in that** the electromechanical device arranged on the lid (4) comprises an electric motor (21, 21 a).

9. Culinary article (1) according to claim 8, **characterised in that** the lid (4) comprises means (16) for stirring or grinding foods arranged in the cap, said stirring or grinding means (16) being driven by the electric motor (21).

10. Culinary article (1) according to claim 9, **characterised in that** the stirring means comprise a mixing blade (16).

11. Culinary article (1) according to claim 8, **characterised in that** the lid (4) comprises means for cooling said lid (4), said cooling means being driven by the electric motor (21 a).

12. Culinary article (1) according to claim 11, **characterised in that** the cooling means comprise a cooling fan (17).

13. Culinary article (1) according to one of claims 1 to 6, **characterised in that** the removable accessory is a device (70) for lighting the inside of the cap (2).

14. Culinary article (1) according to one of claims 1 to 13, **characterised in that** the means for fastening the handle (5b) can be detached to removably fasten said handle (5b) to the side wall (3).

15. Culinary article (1) according to one of claims 1 to 14, **characterised in that** it is a frying pan, a pan, a sauté pan, a stewpot or a pressure cooker forming a sealed cooking chamber, within which the foods are cooked under steam pressure.
